Europäisches Patentamt

European Patent Office

Office européen des brevets

(19)

(11) Veröffentlichungsnummer: **0 317 800**
**A2**

# EUROPÄISCHE PATENTANMELDUNG

(21) Anmeldenummer: 88118283.6

(22) Anmeldetag: 03.11.88

(51) Int. Cl.4: **B29D 31/02**

(30) Priorität: 24.11.87 DE 3739718

(43) Veröffentlichungstag der Anmeldung:
**31.05.89 Patentblatt 89/22**

(84) Benannte Vertragsstaaten:
**DE FR GB IT**

(71) Anmelder: **INA Wälzlager Schaeffler KG**
**Industriestrasse 1-3 Postfach 1220**
**D-8522 Herzogenaurach(DE)**

(72) Erfinder: **Kraus, Gerhard**
**Bergstrasse 9**
**D-8521 Aurachtal(DE)**
Erfinder: **Köhler, Hans-Joachim, Dipl.-Ing.**
**Kolbstrasse 6**
**D-8522 Herzogenaurach(DE)**

(74) Vertreter: **Klug, Horst, Dipl.-Ing. (FH)**
**c/o INA Wälzlager Schaeffler KG Postfach 12**
**20**
**D-8522 Herzogenaurach(DE)**

(54) **Verfahren und Vorrichtung zur Bearbeitung einer Wälzlagerbüchse für Gelenkkreuzzapfen.**

(57) Bei der Bearbeitung einer Wälzlagerbüchse (20) für Gelenkkreuzzapfen (19), die einen geschlossenen Boden (25) aufweist, an welchem von innen eine aus thermoplastichem polymeren Werkstoff bestehende Gleitscheibe (21) anliegt, die wenigstens an einer Stirnfläche eine Profilierung mit Vorsprüngen aufweist, wird auf den Boden (25) und die Gleitscheibe (21) ein axialer Druck aufgebracht. Dabei wird an der Gleitscheibe (21) durch zusätzliche Energiezufuhr eine die bleibende Verformung der Vorsprünge bewirkende Plastifizierung des Gleitscheibenwerkstoffs hervorgerufen.

FIG.6

## Verfahren und Vorrichtung zur Bearbeitung einer Wälzlagerbüchse für Gelenkkreuzzapfen

Die Erfindung betrifft ein Verfahren und eine Vorrichtung zur Bearbeitung einer spanlos hergestellten, insbesondere aus Blech gezogenen Wälzlagerbüchse für Gelenkkreuzzapfen, die aus einer hohlzylindrischen Hülse besteht, in deren Bohrung zylindrische Wälzkörper abrollen, und die an einem Ende für den stirnseitigen Anlauf des Gelenkkreuzzapfens einen geschlossenen Boden aufweist, an welchem von innen eine aus thermoplastischem polymeren Werkstoff bestehende Gleitscheibe anliegt, die wenigstens an einer Stirnfläche eine Profilierung mit Vorsprüngen aufweist, wobei auf den Boden und die Gleitscheibe zur Erzeugung einer Vorspannung ein axialer Druck aufgebracht wird.

Aus der DE-OS 26 16 020 ist eine Wälzlagerbüchse bekannt, die nach einem solchen Verfahren bearbeitet ist. Die Profilierung der Gleitscheibe mit den Vorsprüngen wurde hier vorgeschlagen, um den Einfluß von Toleranzen in der Dicke des Bodens der Lagerbüchse und der dort anliegenden Gleitscheibe auszuschalten. Jede Lagerbüchse des Kreuzgelenks muß in einer äußerst exakten Position in Bezug auf den zugehörigen Gelenkkreuzzapfen in ihrer Aufnahmebohrung der Gelenkgabel befestigt werden, um zwischen dem Boden der Lagerbüchse und der Stirnfläche des Gelenkkreuzzapfens mit Sicherheit jegliches Spiel zu vermeiden. Der Boden und die Stirnfläche müssen daher aneinandergedrückt werden, wobei jedoch die auftretende Vorspannung nicht zu groß sein darf, um einen Höchstwert des beim Abknicken der Gelenkwelle an dem Kreuzgelenk auftretenden Beugemoments nicht zu überschreiten. Ein zu großes Beugemoment würde zu Schwergängigkeit des Gelenks und erhöhtem Verschleiß führen.

Die zur Erzeugung des Beugemoments erforderlichen Normalkräfte zwischen den Stirnflächen der Zapfen und den Böden der Lagerbüchsen werden dadurch erzeugt, daß die Gabelarme der Gelenkgabel während des Einpressens und des Festlegens der Lagerbüchsen elastisch nach außen aufgeweitet werden und nach Beendigung des Aufweitvorgangs zurückfedern.

Bei der Montage der Wälzlagerbüchse mit der Gleitscheibe werden die am Boden der Lagerbüchse anliegenden Vorsprünge der Gleitscheibe durch den axialen Druck verformt, so daß auf diese Weise ein Toleranzausgleich geschaffen wird. In dem polymeren Werkstoff der Gleitscheibe kann im Bereich der Vorsprünge bei dieser Vorgehensweise je nach der Art des Werkstoffs jedoch nur ein mehr oder weniger großer Kaltfluß auftreten. Dabei ist das Setzverhalten des Werkstoffs nicht immer ausreichend.

Der Erfindung liegt die Aufgabe zugrunde, das Verfahren zur Bearbeitung der Lagerbüchse mit der Gleitscheibe so zu verbessern, daß das für den Einbau im Kreuzgelenk erforderlich gemeinsame Dickenmaß des Lagerbüchsenbodens und der Gleitscheibe exakt eingestellt und dauerhaft eingehalten werden kann. Auf diese Weise soll der Einfluß von Einzeltoleranzen der Bauteile, wie Gelenkkreuze, Lagerbüchsen und Gleitscheiben, sowie der Abstände von Nuten für Seegerringe ausgeschaltet werden.

Diese Aufgabe wird erfindungsgemäß dadurch gelöst, daß an der Gleitscheibe durch zusätzliche Energiezufuhr eine die bleibende Verformung der Vorsprünge bewirkende Plastifizierung des Gleitscheibenwerkstoffs hervorgerufen wird. Die auf diese Weise plastifizierte Gleitscheibe verformt sich unter der Wirkung des axialen Drucks an den Vorsprüngen ihrer Profilierung. Wenn diese Vorsprünge beispielsweise sägezahnförmig oder pyramidenförmig sind, so wandert der Werkstoff von den nach außen ragenden Spitzen in die Zwischenräume die jeweils zwischen zwei benachbarten Vorsprüngen liegen. Bei dieser Plastifizierung und Verformung läßt sich daher eine vorgegebene Restdikke des Lagerbüchsenbodens und der anliegenden Gleitscheibe einstellen. Je nach Ausgangsdicke der einander beliebig zugeordneten Teile Lagerbüchsenboden und Gleitscheibe ergibt sich eine unterschiedlich starke Verformung in der Gleitscheibe, wodurch unterschiedliche Dickenmaße dieser Teile auf ein einheitliches Summenendmaß, das gemeinsame verringerte Dickenmaß, gebracht werden.

Nach einer bevorzugten Ausführung des erfindungsgemäßen Verfahrens wird an den Boden oder an die Gleitscheibe in deren axialer Richtung ein Stempel herangefahren und dessen ebene Stirnfläche mit der abgestützten Gleitscheibe bzw. mit dem abgestützten Boden in Kontakt gebracht, worauf über den Stempel die zusätzliche Energiezufuhr erfolgt. Dabei können die Lagerbüchse und die auf dem Boden der Lagerbüchse befindliche Gleitscheibe in einer besonderen Vorrichtung, deren Arbeitswerkzeug der Stempel ist, bearbeitet werden. Der Stempel bewirkt dann die Aufbringung des axialen Druckes und die Zufuhr der zusätzlichen Energie an der Gleitscheibe. Diese Energiezufuhr kann bevorzugt als Ultraschalleinwirkung erfolgen. Es ist aber auch möglich, den Stempel zu erwärmen und diese Wärme auf die Gleitscheibe zu übertragen. Bei einer Erwärmung bietet sich die elektrische Beheizung des Stempels an.

Der Stempel wird bei dem Bearbeitungsverfahren so weit dem Boden angenähert, bis das verringerte gemeinsame Dickenmaß von Boden und Gleitscheibe einem vorher bestimmten Abstand zwischen der Stirnfläche des Stempels und der Außenfläche des Bodens entspricht. Auf diese Weise wird auch bei unterschiedlichen Toleranzen der Bauteile der Zapfenlagerung die richtige Vorspannung zwischen dem Lagerbüchsenboden und der Zapfenstirnfläche eingestellt, so daß sowohl ein Spiel als auch eine zu große Schwergängigkeit des Gelenks vermieden wird.

Die Bearbeitung der Wälzlagerbüchse kann in einer besonderen Vorrichtung, beispielsweise in einer Ultraschall-Schweißmaschine, erfolgen. In diesem Fall ist der Stempel als Sonotrode der Schweißmaschine ausgebildet, während die Lagerbüchese mit der darin befindliche Gleitscheibe in einer Werkstückaufnahme unterhalb des Stempels in dieser Maschine abgestützt ist.

Es ist auch möglich, die Lagerbüchsen mit Gleitscheiben im unbearbeiteten Zustand beim Zusammenbau des Kreuzgelenks an dem Gelenkkreuzzapfen zu montieren und erst in diesem zusammengebauten Zustand die Verformung der Gleitscheiben durchzuführen. In diesem Fall kann das montierte Kreuzgelenk bevorzugt in eine Vorrichtung mit einem U-förmigen Bügel eingesetzt werden, so daß es sich zwischen den U-Schenkeln dieses Bügels befindet. Im Bereich der U-Schenkel können Stempel gelagert sein, die mit an der Außenseite der U-Schenkel angeordneten Druckzylindern in Richtung der Stirnseiten der beiden Gelenkkreuzzapfen einer Drehachse bewegt werden. Bei der Berührung zwischen dem Boden der Lagerbüchse und dem Stempel kann jeweils die zusätzliche Energie auf die Lagerbüchse und die Gleitscheibe übertragen werden. Ein axialer Druck ergibt sich in dem Boden und der Gleitscheibe infolge des Einbaus am Gelenkkreuzzapfen durch Aufweiten der Gabelarme.

Bevorzugte Ausführungsformen der Erfindung sind in den Schutzansprüchen enthalten.

Die Erfindung wird im folgenden anhand der Zeichnungen erläutert. Es zeigen:

Fig. 1 eine Lagerbüchse mit einer Gleitscheibe, die unterhalb eines Stempels in eine Werkstückaufnahme eingesetzt ist, in einem Längsschnitt;

Fig. 2 einen vergrößerten Ausschnitt eines Bodens und einer anliegenden Gleitscheibe im Bereich eines Vorsprungs;

Fig. 3 einen vergrößerten Ausschnitt eines weiteren Bodens und einer weiteren anliegenden Gleitscheibe im Bereich eines Vorsprungs;

Fig. 4 den Boden und die Gleitscheibe gemäß Fig. 2 nach der Verformung auf ein gemeinsames verringertes Dickenmaß;

Fig. 5 den Boden und die Gleitscheibe gemäß Fig. 3 nach der Verformung auf das gemeinsame Dickenmaß gemäß Fig. 4;

Fig. 6 eine Ansicht eines in eine Bearbeitungsvorrichtung eingesetzten Kreuzgelenks mit einem teilweisen Axialschnitt durch einen Gelenkkreuzzapfen mit aufgesteckter Lagerbüchse und Gleitscheibe.

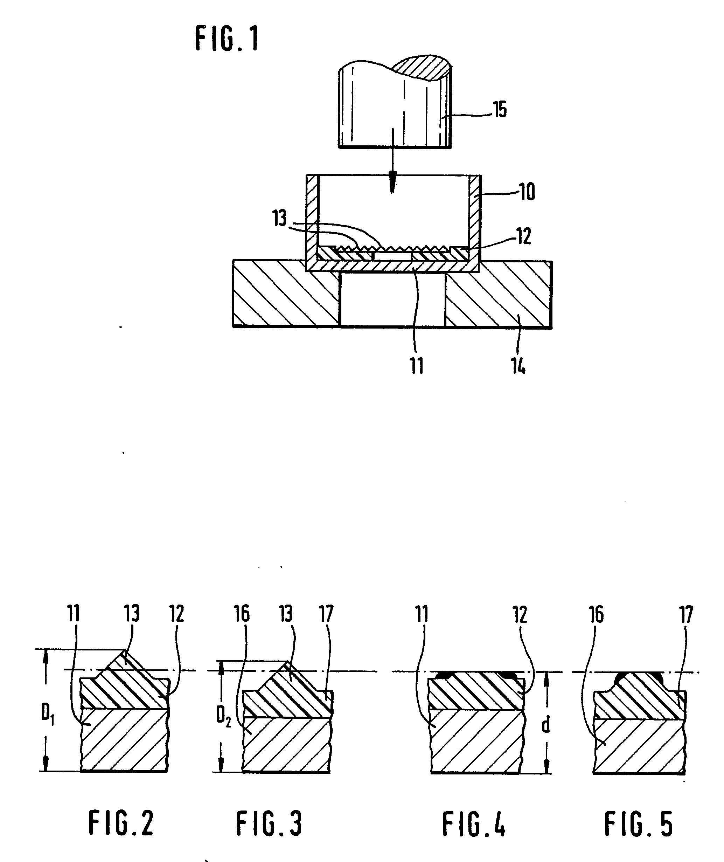

Fig. 1 zeigt eine Lagerbüchse 10 mit einem Boden 11 und eine in der Lagerbüchse 10 auf dem Boden liegende Gleitscheibe 12 mit Vorsprüngen 13. Die Lagerbüchse 10 ist ein gezogenes metallisches Bauteil, während die Gleitscheibe 12 ein Teil aus einem polymeren Werkstoff ist. Die Vorsprünge 13 der Gleitscheibe 12 können beispielsweise als Sägezähne oder Pyramiden ausgebildet sein. Sie befinden sich an der oberen, freien Oberfläche der Gleitscheibe 12.

Nach dem erfindungsgemäßen Verfahren wird die Lagerbüchse 10 mit der Gleitscheibe 12 in eine Werkstückaufnahme 14 einer Bearbeitungsmaschine eingesetzt. Über der Werkstückaufnahme 14 befindet sich ein axial verfahrbarer Stempel 15. Dieser wird an die Gleitscheibe 12 herangefahren und übt über die Vorsprünge 13 einen Druck auf die Gleitscheibe 12 und den boden 11 der Lagerbüchse aus. Außerdem wird über den Stempel 15 eine zusätzliche Energie auf die Gleitscheibe 12 übertragen, wodurch sich eine Plastifizierung der an ihren Vorsprüngen 13 von dem Stempel 15 verformten Gleitscheibe 12 ergibt. Infolge dieser Plastifizierung wandern die Spitzen der Vorsprünge 13 in die Kerben, die sich jeweils zwischen zwei benachbarten Vorsprüngen 13 befinden.

Fig. 2 zeigt einen gegenüber Fig. 1 vergrößerten Ausschnitt des Bodens 11 und der Gleitscheibe 12 mit den Vorsprüngen 13 gemäß Fig. 1 der Zeichnung, vor der Einwirkung des Stempels 15, mit dem gemeinsamen Dickenmaß $D_1$. Nach der Verformung durch den Stempel 15 hat diese Gleitscheibe 12 auf dem Boden 11 die in Fig. 4 dargestellte Form ange nommen. Die Spitzen der Vorsprünge 13 sind heruntergedrückt, so daß sich nun für den Boden 11 und die Gleitscheibe 12 ein verringertes Dickenmaß d ergibt.

In entsprechender Weise wird ein weiterer Boden 16 mit einer weiteren Gleitscheibe 17 gemäß Fig. 3, die jeweils eine andere Ausgangsdicke und damit ein anderes gemeinsames Dickenmaß $D_2$ haben, als der Boden 11 und die Gleitscheibe 12, mit dem Stempel 15 bearbeitet, so daß gemäß Fig. 5, auch dieser Boden 16 und diese Gleitscheibe 17 dasselbe verringerte Dickenmaß d erhalten, wie der Boden 11 und die Gleitscheibe 12 in Fig. 4. Hier ist die Verformung der Vorsprünge 13 geringer. Nach dem erfindungsgemäßen Verfahren lassen sich also Toleranzeinflüsse unterschiedlicher Böden 11, 16 und unterschiedlicher Gleitscheiben 12, 17 ausschalten. Alle miteinander gepaarten Böden und Gleitscheiben erhalten dasselbe verringerte Dickenmaß d.

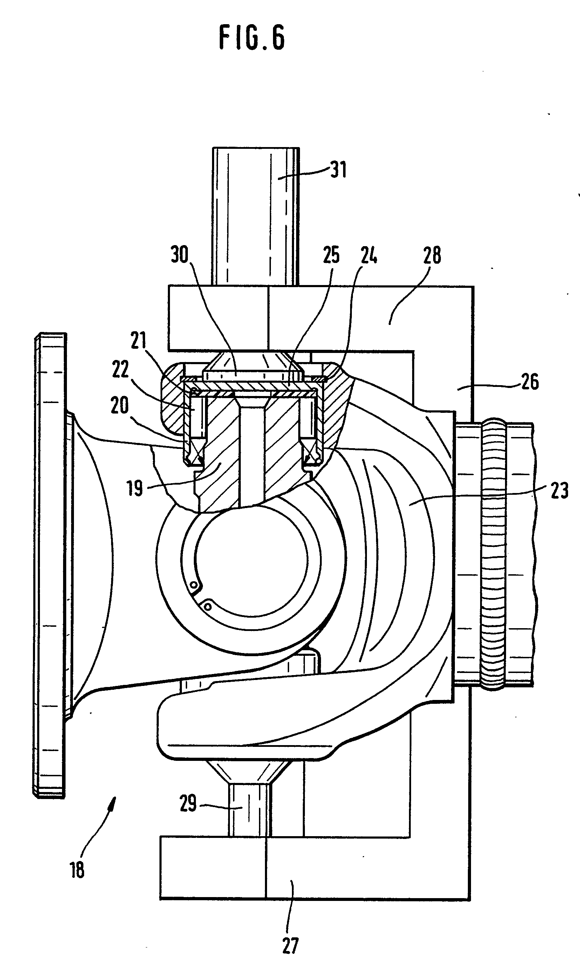

In Fig. 6 der Zeichnung ist ein Gelenkkreuzzapfen 19 eines Kreuzgelenks 18 im Schnitt dargestellt. Dieser ist ebenso, wie die nicht dargestellten weiteren Gelenkkreuzzapfen des Zapfenkreuzes, bereits mit einer Lagerbüchse 20 und einer Gleitscheibe 21 versehen und in diesem zusammengebauten Zustand in eine Bearbeitungsvorrichtung eingesetzt. Die Lagerbüchse 20 mit der eingesetzten Gleitscheibe 21 und den ebenfalls eingesetzten, als Lagernadeln ausgebildeten Wälzkörpern 22 wird in der Gelenkgabel 23 mit Hilfe eines Seegerringes 24 gehalten, der sich in einer Ringnut in der Bohrung der Lagergabel 23 befindet.

Bereits durch das Aufweiten der Arme der Gelenkgabel 23 beim Einsetzen der Lagerbüchse 20 wird hier auf den Boden 25 und auf die Gleitscheibe 21 ein axialer Druck ausgeübt. Die Bearbeitungsvorrichtung besteht nun aus einem Bügel 26 in U-Form, mit einem unteren U-Schenkel 27 und einem oberen U-Schenkel 28. Das Kreuzgelenk 18 ist so zwischen den U-Schenkeln 27 und 28 angeordnet, daß eine durch zwei Gelenkkreuzzapfen 19 verlaufende gemeinsame Gelenkkreuzachse 29 zwischen den freien Enden der U-Schenkel verläuft. Längs dieser Achse können zwei Stempel 30 an die Böden 25 der Lagerbüchsen 20 angelegt werden. Der im Bereich des oberen U-Schenkels 28 gelagerte darge- Stempel 30 ist von einem Druckzylinder 31 beaufschlagt, der an der Außenseite des oberen U-Schenkels 28 angeordnet ist.

Die Bearbeitung der Gleitscheibe 21 an dem Boden 25 erfolgt in dieser Vorrichtung nun so, daß der Stempel 30 an die Außenseite des Bodens 25 herangefahren wird und hier seine zusätzliche Energie auf den Boden 25 und die Gleitscheibe 21, beispielsweise in Form von Ultraschall- oder Wärmeenergie, überträgt. Dadurch erfolgt die Plastifizierung der Gleitscheibe 21, so daß deren Vorsprünge, die entweder an der Stirnfläche des Gelenkkreuzzapfens 19 oder an der inneren Oberfläche des Bodens 25 anliegen, verformt werden. Die Verformungskraft ist entweder allein durch das Rückfedern der Gabelarme gegeben, oder es wird ein zusätzlicher axialer Druck von dem Stempel 30 auf den Boden 25 und die Gleitscheibe 21 übertragen.

## Ansprüche

1. Verfahren zur Bearbeitung einer spanlos hergestellten, insbesondere aus Blech gezogenen Wälzlagerbüchse für Gelenkkreuzzapfen, die aus einer hohlzylindrischen Hülse besteht, in deren Bohrung zylindrische Wälzkörper abrollen, und die an einem Ende für den stirnseitigen Anlauf des Gelenkkreuzzapfens einen geschlossenen boden aufweist, an welchem von innen eine aus thermoplastischem polymeren Werkstoff bestehende Gleitscheibe anliegt, die wenigstens an einer Stirnfläche eine Profilierung mit Vorsprüngen aufweist, wobei auf den Boden und die Gleitscheibe zur Erzeugung einer Vorspannung ein axialer Druck aufgebracht wird, **dadurch gekennzeichnet, daß** an der Gleitscheibe (12, 17, 21) durch zusätzliche Energiezufuhr eine die bleibende Verformung der Vorsprünge (13) bewirkende Plastifizierung des Gleitscheibenwerkstoffs hervorgerufen wird.

2. Verfahren nach Anspruch 1, **dadurch gekennzeichnet, daß** an den Boden (11, 16, 25) oder an die Gleitscheibe (12, 17, 21) in deren axialer Richtung ein Stempel (15, 30) herangefahren und dessen ebene Stirnfläche mit der abgestützten Gleitscheibe (12, 17, 21) bzw. mit dem abgestützten Boden (11, 16, 25) in Kontakt gebracht wird, worauf über den Stempel (15, 30) die zusätzliche Energiezufuhr erfolgt.

3. Verfahren nach den Ansprüchen 1 und 2, **dadurch gekennzeichnet, daß** auf den Boden (11, 16) und die Gleitscheibe (12, 17) der axiale Druck nur über den Stempel (15) aufgebracht wird, wobei dieser so weit dem Boden (11, 16) angenähert wird, bis das verringerte gemeinsame Dickenmaß (d) von Boden (11, 16) und Gleitscheibe (12, 17) einem vorher be stimmten Abstand zwischen der Stirnfläche des Stempels (15) und der Außenfläche des Bodens (11, 16) entspricht.

4. Verfahren nach einem der vorhergehenden Ansprüche, **dadurch gekennzeichnt, daß** über den Stempel (15, 30) eine Ultraschalleinwirkung auf die Gleitscheibe (12, 17, 21) erfolgt.

5. Verfahren nach einem der vorhergehenden Ansprüche, **dadurch gekennzeichnet, daß** über den Stempel (15, 30) eine Erwärmung der Gleitscheibe (12, 17, 21) erfolgt.

6. Verfahren nach einem der vorhergehenden Ansprüche, **dadurch gekennzeichnet, daß** der Stempel (15, 30) elektrisch beheizt wird.

7. Vorrichtung zur durchführung des Verfahrens nach den Ansprüchen 1 bis 6, mit einem axial verfahrbaren Stempel, **gekennzeichnet durch** eine unterhalb des Stempels (15) befindliche, die Lagerbüchse (10) mit der Gleitscheibe (12, 17) abstützende Werkstückaufnahme (14).

8. Vorrichtung nach Anspruch 7, **dadurch gekennzeichnet, daß** der Stempel (15, 30) als Sonotrode einer Ultraschallschweißmaschine ausgebildet ist.

9. Vorrichtung nach Anspruch 7, **gekennzeichnet durch** einen U-förmigen Bügel (26), zwischen dessen U-Schenkeln (27, 28) ein montiertes Kreuzgelenk (18) mit auf den Gelenkkreuzzapfen (19) aufgesteckten, noch unbearbeiteten Lagerbüchsen (20) und Gleitscheiben (21) angeordnet ist, wobei jeweils die beiden Lagerbüchsen (20) derselben Drehachse mit ihren Gleitscheiben (21) gleichzeitig von zwei Stempeln (30) bearbeitbar sind.

10. Vorrichtung nach anspruch 9, **dadurch gekennzeichnet,** daß jeweils ein Stempel (30) im Bereich eines U-Schenkels (28) des Bügels (26) gelagert und von einem an der Außenseite des U-Schenkels (28) angeordneten Druckzylinder (31) beaufschlagt ist.

FIG.1

FIG.2     FIG.3     FIG.4     FIG.5

# FIG.6